# FASCICULE DE BREVET EUROPEEN

(11) **EP 2 812 986 B1**
(45) Date de publication et mention de la délivrance du brevet: **20.12.2017**
(21) Numéro de dépôt: 13703804.8
(22) Date de dépôt: 08.02.2013
(51) Int. Cl.: H02K 5/12, H02K 17/16

(54) **MOTEUR ÉLECTRIQUE À GRANDE VITESSE**
HOCHGESCHWINDIGKEITSELEKTROMOTOR
HIGH-SPEED ELECTRIC MOTOR

(30) Priorité: 10.02.2012 FR 1251281
(43) Date de publication de la demande: 17.12.2014
(73) Titulaire: GE Energy Power Conversion Technology Limited, Rugby Warwickshire CV21 1BU (GB)
(72) Inventeur: LAMBOTTE, Manéa, F-54121 Vandieres (FR); DURANTAY, Lionel, F-54390 Frouard (FR)
(74) Mandataire: Serjeants LLP
(86) Numéro de dépôt international: PCT/EP2013/052608
(87) Numéro de publication internationale: WO 2013/117736

(56) Documents cités:
- EP-A1- 2 348 614
- EP-A2- 0 504 994
- EP-A2- 2 378 641
- DE-A1- 19 531 861
- US-A- 6 012 900
- US-A1- 2006 250 037
- P Giffard: "Pevêtements métallisation", , 5 juin 2008 (2008-06-05), XP055046321, Extrait de l'Internet: URL:http://www.mnihitech.free.fr/index.php ?2008/06/05/2-skidcoat [extrait le 2012-12-03]
- "Tribologie/Rêvetements anti usure", , 8 mars 2011 (2011-03-08), XP055046310, Extrait de l'Internet: URL:http://web.archive.org/web/20110609050 132/http://fr.wikibooks.org/wiki/Tribologi e/Rev%C3%AAtements_anti-usure [extrait le 2012-12-03]

## Description

La présente invention concerne un moteur, du type moteur électrique comportant un stator et un rotor propre à tourner à une vitesse de rotation supérieure à 8000 tours par minute, lequel rotor comporte un corps magnétique porté par un arbre de rotation, le corps magnétique délimitant une surface latérale extérieure.

Dans le domaine de l'exploitation de gaz d'hydrocarbures, il est connu de placer des moteurs d'entraînement de compresseur directement dans le gaz pour leur refroidissement.

On connaît des moteurs protégés par chemisage, qui peuvent être placés dans des milieux gazeux, mais ces moteurs sont peu performants car leur vitesse de rotation est relativement lente, et présentent un rendement moins élevé à cause des pertes supplémentaires dans le chemisage.

On connaît également des moteurs à vitesse de rotation plus élevée. Ces derniers se doivent de fonctionner rapidement et leur rotor est donc uniquement constitué d'un empilement de tôles et d'enroulements. Par conséquent, dans les environnements agressifs, ils se détériorent très rapidement sous l'action de la corrosion, ce qui les rend inutilisables sur le marché de l'extraction de gaz.

Un but de l'invention est donc de fournir un moteur à grande vitesse pouvant être utilisé dans des milieux gazeux et ayant une durée de vie satisfaisante dans ces milieux.

A cet effet, l'invention a pour objet un moteur du type précité, le moteur comportant un revêtement de protection sur la surface latérale extérieure du corps magnétique du rotor. Un tel moteur est décrit dans le document EP 0504994 A2. Le moteur selon l'invention est caractérisé en ce que l'épaisseur du revêtement de protection est comprise entre 0,1 et 2 mm.

Suivant des modes particuliers de réalisation, le moteur selon l'invention comporte l'une ou plusieurs des caractéristiques suivantes :
- le revêtement de protection comporte du polyétheréthercétone (PEEK) ;
- le revêtement de protection comporte entre 5% et 25% de PEEK ;
- le corps magnétique comporte un empilement de tôles dont les flancs forment la surface latérale extérieure et le revêtement de protection recouvre les flancs des tôles ;
- le moteur comporte une couche d'un alliage de nickel intermédiaire entre la surface latérale extérieure et le revêtement de protection ;
- le rotor comporte des barres reliées par des couronnes de court-circuit disposées axialement de part et d'autre du corps magnétique et le revêtement de protection recouvre également lesdites couronnes de court-circuit ;
- le revêtement de protection est constitué de SKIDCOAT ; et
- la surface du revêtement est rectifiée mécaniquement.

L'invention a également pour objet un procédé de fabrication d'un moteur tel que défini ci-dessus, comportant l'application du revêtement de protection sur la surface latérale extérieure du corps magnétique par projection plasma.

Le procédé selon l'invention comporte l'une ou plusieurs des caractéristiques suivantes :
- le procédé comporte une étape de rectification mécanique de la surface extérieure du revêtement de protection ; et
- l'application du revêtement de protection par projection plasma est précédée du dépôt d'une sous-couche d'un alliage de nickel sur la surface latérale extérieure du corps magnétique, réalisé en chauffant le rotor.

L'invention a également pour objet l'utilisation d'un moteur tel que défini ci-dessus, dans un milieu comportant un gaz d'hydrocarbure.

L'invention sera mieux comprise à la lecture de la description qui va suivre, donnée uniquement à titre d'exemple et faite en se référant aux dessins annexés, sur lesquels :
- la Figure 1 est une vue de côté d'un moteur selon l'invention ; et
- la Figure 2 est une vue en bout du moteur de la Figure 1.

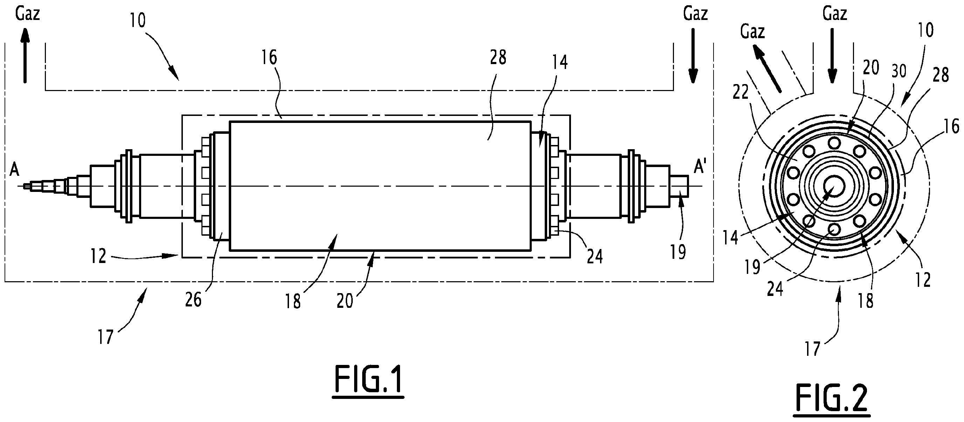

Comme illustré sur la Figure 1, le moteur 10 comporte un stator 12, fixe, et un rotor 14, mobile, positionné à l'intérieur du stator 12. Le stator 12 et le rotor 14 sont tous deux de révolution autour d'un axe de rotation A-A'. Ils sont séparés par un entrefer 16.

Le stator 12 est équipé de bobines électriques comme connu en soi.

Le moteur 10 comporte une carcasse 17 dans laquelle circule un gaz d'hydrocarbure, notamment un gaz naturel. Le gaz, par son débit, assure le refroidissement du moteur 10.

Le rotor 14 comporte un corps magnétique 18 de forme cylindrique porté par un arbre de rotation 19. Le corps magnétique 18 délimite une surface latérale extérieure 20. Le corps magnétique 18 comporte un empilement de tôles 22 qui présentent des flancs formant ensemble la surface latérale extérieure 20. Des barres 24 constituant une cage à écureuil traversent l'empilement de tôles 22 dans une direction parallèle à l'axe de rotation A-A'. Ces barres sont reliées électriquement à leurs extrémités par des couronnes de court-circuit 26 positionnées axialement de part et d'autre du corps magnétique 18.

La surface latérale extérieure 20 est de révolution autour de l'axe A-A' de rotation du rotor 14. Elle est recouverte d'un revêtement 28 de protection contre les attaques dues au milieu ambiant. L'épaisseur du revêtement 28 est comprise entre 0,1 et 2 mm. Il est formé directement sur les flancs des tôles 22.

Le revêtement 28 de protection est un composite polymère-céramique. Il comporte du polyétheréthercétone (PEEK) à un pourcentage massique compris entre 5% et 25%. Avantageusement, le revêtement 28 de protection est constitué de SKIDCOAT, commercialisé par la société Métallisation Nord Industrie en France. Le revêtement est constitué, par exemple, de 90% de Al₂O₃ et de 10% de PEEK.

Dans une variante, le revêtement 28 de protection est constitué d'un autre matériau de type céramique associé à du PEEK ou uniquement de NiCr, Al₂O₃ ou Cr₂O₃.

En variante, et avantageusement, la surface latérale extérieure 20 est recouverte par une sous-couche d'un alliage de nickel 30, elle-même recouverte du revêtement 28 de protection.

Avantageusement, le revêtement 28 de protection recouvre également les couronnes de court-circuit 26.

Le revêtement 28 de protection est déposé sur la surface latérale extérieure 20 par projection plasma. Un plasma généré à partir d'un gaz plasmagène est dirigé vers la surface latérale extérieure 20. Il fond et accélère le matériau à projeter sur la surface latérale extérieur 20, formant le revêtement 28.

La surface extérieure du revêtement 28 de protection ainsi déposée par plasma, est rectifiée mécaniquement. Selon un mode particulier de réalisation, cette étape de rectification est réalisée par un outil se déplaçant parallèlement à l'axe A-A' de rotation et mis au contact du rotor 14. L'outil ou le rotor 14 est alors en rotation. Cette rectification permet d'obtenir un revêtement homogène et sans porosité et d'avoir un entrefer constant, limitant les risques de balourd.

Dans une variante, le dépôt du revêtement 28 de protection par projection plasma est précédé du dépôt d'une sous-couche d'un alliage de nickel 30 sur la surface latérale extérieure 20, réalisé en chauffant le rotor 14.

Le revêtement 28 de protection permet, par ses caractéristiques anti-usure et anticorrosion, de prolonger la vie des moteurs à grande vitesse et de les utiliser dans des environnements plus agressifs, notamment dans le domaine de l'exploitation de gaz d'hydrocarbures.

## Revendications

1. Moteur électrique (10) comportant un stator (12) et un rotor (14) propre à tourner à une vitesse de rotation supérieure à 8000 tours par minute, lequel rotor (14) comporte un corps magnétique (18) porté par un arbre de rotation (19), le corps magnétique (18) délimitant une surface latérale extérieure (20), le moteur électrique comportant un revêtement (28) de protection sur la surface latérale extérieure (20) du corps magnétique (18), **caractérisé en ce que** l'épaisseur du revêtement de protection (28) est comprise entre 0,1 et 2 mm.

2. Moteur (10) selon la revendication 1, **caractérisé en ce que** le revêtement (28) de protection comporte du polyétheréthercétone (PEEK).

3. Moteur (10) selon la revendication 1 ou 2, **caractérisé en ce que** le revêtement (28) de protection comporte entre 5% et 25% de PEEK.

4. Moteur (10) selon l'une quelconque des revendications 1 à 3, **caractérisé en ce que** le corps magnétique (18) comporte un empilement de tôles (22) dont les flancs forment ensemble ladite surface latérale extérieure (20) et que le revêtement (28) de protection recouvre lesdits flancs.

5. Moteur (10) selon l'une quelconque des revendications précédentes, **caractérisé en ce qu'**il comporte une couche intermédiaire d'un alliage de nickel (30) entre la surface latérale extérieure (20) du corps magnétique (18) et le revêtement (28) de protection.

6. Moteur (10) selon l'une quelconque des revendications précédentes, **caractérisé en ce que** le rotor (14) comporte des barres (24) reliées par des couronnes de court-circuit (26) disposées axialement de part et d'autre du corps magnétique (18) et **en ce que** le revêtement (28) de protection recouvre également lesdites couronnes de court-circuit (26).

7. Moteur (10) selon l'une quelconque des revendications précédentes, **caractérisé en ce que** la surface du revêtement (28) de protection est rectifiée mécaniquement.

8. Procédé de fabrication d'un moteur (10) selon l'une quelconque des revendications précédentes, comportant l'application du revêtement (28) de protection sur la surface latérale extérieure (20) du corps magnétique (18) par projection plasma.

9. Procédé selon la revendication 8, **caractérisé en ce qu'**il comporte une étape de rectification mécanique de la surface extérieure du revêtement (28) de protection.

10. Procédé selon la revendication 8 ou 9, **caractérisé en ce que** l'application du revêtement (28) de protection par projection plasma est précédée du dépôt d'une sous-couche d'un alliage de nickel (30) sur la surface latérale extérieure (20) du corps magnétique (18), réalisé en chauffant le rotor (14).

11. Utilisation d'un moteur (10) selon l'une quelconque des revendications 1 à 7 dans un milieu comportant un gaz d'hydrocarbure.

## Patentansprüche

1. Elektromotor (10), der einen Stator (12) und einen Rotor (14) aufweist, der mit einer Drehzahl größer als 800 Umdrehungen pro Minute drehbar ist, wobei der Rotor (14) einen Magnetkörper (18) aufweist, der von einer Drehwelle (19) getragen ist, wobei der Magnetkörper (18) eine äußere Seitenfläche (20) festlegt, wobei der Elektromotor eine Schutzbeschichtung (28) auf der äußeren Seitenfläche (20) des Magnetkörpers (18) aufweist, **dadurch gekennzeichnet, dass** die Dicke der Schutzbeschichtung (28) zwischen 0,1 und 2 mm beträgt.

2. Motor (10) nach Anspruch 1, **dadurch gekennzeichnet, dass** die Schutzbeschichtung (28) Polyetheretherketon (PEEK) aufweist.

3. Motor (10) nach Anspruch 1 oder 2, **dadurch gekennzeichnet, dass** die Schutzbeschichtung (28) zwischen 5% und 25% PEEK aufweist.

4. Motor (10) nach einem beliebigen der Ansprüche 1 bis 3, **dadurch gekennzeichnet, dass** der Magnetkörper (18) ein Blechpaket (22) aufweist, dessen Flanken gemeinsam die äußere Seitenfläche (20) bilden, und dass die Schutzbeschichtung (28) die Flanken bedeckt.

5. Motor (10) nach einem beliebigen der vorhergehenden Ansprüche, **dadurch gekennzeichnet, dass** er eine Zwischenschicht aus einer Nickellegierung (30) zwischen der äußeren Seitenfläche (20) des Magnetkörpers (18) und der Schutzbeschichtung (28) aufweist.

6. Motor (10) nach einem beliebigen der vorhergehenden Ansprüche, **dadurch gekennzeichnet, dass** der Rotor (14) Stäbe (24) aufweist, die durch Kurzschlussringe (26) verbunden sind, die in Axialrichtung auf beiden Seiten des Magnetkörpers (18) angeordnet sind, und dass die Schutzbeschichtung (28) auch die Kurzschlussringe (26) bedeckt.

7. Motor (10) nach einem beliebigen der vorhergehenden Ansprüche, **dadurch gekennzeichnet, dass** die Oberfläche der Schutzbeschichtung (28) mechanisch geschliffen ist.

8. Verfahren zur Herstellung eines Motors (10) nach einem beliebigen der vorhergehenden Ansprüche, das die Aufbringung der Schutzbeschichtung (28) auf die äußere Seitenfläche (20) des Magnetkörpers (18) durch Plasmaspritzen aufweist.

9. Verfahren nach Anspruch 8, **dadurch gekennzeichnet, dass** es einen Schritt des mechanischen Schleifens der äußeren Oberfläche der Schutzbeschichtung (28) aufweist.

10. Verfahren nach Anspruch 8 oder 9, **dadurch gekennzeichnet, dass** dem Aufbringen der Schutzbeschichtung (28) durch Plasmaspritzen das Aufbringen einer Unterschicht aus einer Nickellegierung (30) auf die äußere Seitenfläche (20) des Magnetkörpers (18) vorausgeht, das durch Erwärmen des Rotors (14) realisiert wird.

11. Verwendung eines Motors (10) nach einem beliebigen der Ansprüche 1 bis 7 in einem Medium, das Kohlenwasserstoffgas aufweist.

## Claims

1. Electric motor (10) comprising a stator (12) and a rotor (14) able to turn at a rotation speed of more than 8000 revolutions per minute, said rotor (14) comprises a magnetic body (18) carried by a rotation shaft (19), the magnetic body (18) delimiting an outer lateral surface (20), the electric motor comprising a protective cladding (28) on the outer lateral surface (20) of the magnetic body (18), **characterised in that** the thickness of the protective cladding (28) is between 0.1 and 2 mm.

2. Motor (10) according to claim 1, **characterised in that** the protective cladding (28) comprises polyether-ether-ketone (PEEK).

3. Motor (10) according to claim 1 or 2, **characterised in that** the protective cladding (28) comprises between 5% and 25% PEEK.

4. Motor (10) according to any of claims 1 to 3, **characterised in that** the magnetic body (18) comprises a stack of plates (22), the flanks of which together form said outer lateral surface (20), and **in that** the protective cladding (28) covers said flanks.

5. Motor (10) according to any of the preceding claims, **characterised in that** it comprises an intermediate layer of a nickel alloy (30) between the outer lateral surface (20) of the magnetic body (18) and the protective cladding (28).

6. Motor (10) according to any of the preceding claims, **characterised in that** the rotor (14) comprises bars (24) connected by short-circuit rings (26) arranged axially on either side of the magnetic body (18), and **in that** the protective cladding (28) also covers said short-circuit rings (26).

7. Motor (10) according to any of the preceding claims, **characterised in that** the surface of the protective cladding (28) is mechanically ground.

8. Method for production of a motor (10) according to any of the preceding claims, comprising the application of the protective cladding (28) to the outer lateral surface (20) of the magnetic body (18) by plasma projection.

9. Method according to claim 8, **characterised in that** it comprises a step of mechanical grinding of the outer surface of the protective cladding (28).

10. Method according to claim 8 or 9, **characterised in that** the application of the protective cladding (28) by plasma projection is preceded by the deposit of a sublayer of a nickel alloy (30) on the outer lateral surface (20) of the magnetic body (18), performed by heating the rotor (14).

11. Use of a motor (10) according to any of claims 1 to 7 in an environment comprising a hydrocarbon gas.
